(19) Europäisches Patentamt
European Patent Office
Office européen des brevets

(11) **EP 4 250 451 A1**

(12) **EUROPEAN PATENT APPLICATION**
published in accordance with Art. 153(4) EPC

(43) Date of publication:
**27.09.2023 Bulletin 2023/39**

(21) Application number: **21895098.8**

(22) Date of filing: **17.11.2021**

(51) International Patent Classification (IPC):
**H01M 50/24** (2021.01)　　**H01M 50/20** (2021.01)

(52) Cooperative Patent Classification (CPC):
**H01M 50/20; H01M 50/24**

(86) International application number:
**PCT/KR2021/016890**

(87) International publication number:
**WO 2022/108330 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.11.2020 KR 20200153881**
　　　　　　**15.11.2021 KR 20210157031**

(71) Applicant: **LX Hausys, Ltd.**
**Seoul 04637 (KR)**

(72) Inventors:
 • **AHN, Seunghyun**
　**Seoul 07796 (KR)**

 • **LEE, Myung**
　**Seoul 07796 (KR)**
 • **KIM, Won**
　**Seoul 07796 (KR)**
 • **RHO, Sang Hyun**
　**Seoul 07796 (KR)**
 • **YU, Dayoung**
　**Seoul 07796 (KR)**
 • **CHOI, Hyunjin**
　**Seoul 07796 (KR)**
 • **OH, Aeri**
　**Seoul 07796 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **SANDWICH PANEL FOR PROTECTIVE COVER OF BATTERY PACK FOR ELECTRIC VEHICLE, MANUFACTURING METHOD THEREFOR, AND PROTECTIVE COVER OF ELECTRIC VEHICLE BATTERY PACK COMPRISING SAME**

(57) The present invention relates to a sandwich panel for a protective cover of an electric vehicle battery pack, including: a core layer that has a non-woven fiber aggregate structure; a skin layer that is stacked on at least one surface of the core layer; and an adhesive layer that bonds the core layer and the skin layer, wherein the core layer includes a thermoplastic resin and a flame retardant fiber, a manufacturing method therefor, and a protective cover of an electric vehicle battery pack.

【Figure 1】

Metal Skin (EGI, Al)
→ Adhesive layer
→ Non-woven core material
→ Flame retardant fiber: GF, Frame retardant PET
→ Thermoplastic resin: PP, PET, PA

**Description**

[Technical Field]

The present invention relates to a sandwich panel for a protective cover of an electric vehicle battery pack, a manufacturing method therefor, and a protective cover of an electric vehicle battery pack comprising the same.

[Background Art]

Electric vehicles, which have been continuously attracting attention as an alternative to reducing the problem of air pollutants emitted from vehicles, are gradually replacing internal combustion engine vehicles due to recent improvement in battery efficiency and capacity, and a demand of the electric vehicles is increasing. A protective cover of a battery pack, which is a component that protects a battery pack as a key component of an electric vehicle, corresponds to an essential component which is mounted on an upper or lower portion of a battery pack housing to protect the battery pack from external shock and moisture penetration.

The protective cover of an electric vehicle battery pack is currently made of metal materials such as steel, titanium, and aluminum, or thermoplastic and thermosetting fiber-reinforced composite materials. However, a protective cover of a metal material has the disadvantage of high thermal conductivity and weight, and the fiber-reinforced composite material is a lightweight material with low thermal conductivity, but has a disadvantage that it is difficult to secure a battery space compared to metal materials because it is difficult to manufacture with a thin thickness and the disadvantage in that it should include a separate flame retardant layer in order to secure flame retardant performance.

In order to overcome the above problems, there is a need for research and development of a protective cover for an electric vehicle battery pack that is lightweight, has improved flame retardant performance, and may maintain mechanical properties.

(Patent Document 1) Korean Laid-open Patent Publication No. 10-2017-0140111, "A SANDWICH PANEL AND A MANUFACTURING METHOD THEREOF"

[Disclosure]

[Technical Problem]

In order to solve the above problems, the present inventors have completed the present invention by studying, as one component included in a vehicle, a sandwich panel for a protective cover of an electric vehicle battery pack that can reduce a weight of a material of the protective cover of battery pack, has an excellent flame retardant effect, and can secure mechanical properties.

Therefore, an object of the present invention is to provide a sandwich panel for a protective cover of an electric vehicle battery pack that is lightweight, has excellent flame retardant performance and excellent mechanical properties, a manufacturing method therefor, and a protective cover of an electric vehicle battery pack comprising the same by applying a core layer and a skin layer including a core material of a non-woven fiber aggregate structure containing "thermoplastic resin and flame retardant fiber" instead of the conventional metal material or fiber-reinforced composite material during manufacturing of the sandwich panel.

[Technical Solution]

According to a first aspect of the present invention,
provided is a sandwich panel for a protective cover of an electric vehicle battery pack, including: a core layer that has a non-woven fiber aggregate structure; a skin layer that is stacked on at least one surface of the core layer; and an adhesive layer that bonds the core layer and the skin layer, wherein the core layer includes a thermoplastic resin and a flame retardant fiber.

In one embodiment of the present invention, the core layer may include 30 wt% or more of flame retardant fiber based on a total weight of the core layer.

In one embodiment of the present invention, the core layer may include 50 wt% or more of flame retardant fiber based on a total weight of the core layer.

In one embodiment of the present invention, the core layer may include 60 wt% or more of flame retardant fiber based on a total weight of the core layer.

In one embodiment of the present invention, the core layer may include 70 wt% or more of flame retardant fiber based on a total weight of the core layer.

In one embodiment of the present invention, the core layer may further include a phosphorus flame retardant agent.

In one embodiment of the present invention, the thermoplastic resin may be selected from the group consisting of polyethylene, polypropylene, polyethylene terephthalate, polytrimethylene terephthalate, polybutylene terephthalate, polyethylene naphthalate, polyamide, polyphenylene sulfide, and combinations thereof.

In one embodiment of the present invention, the flame retardant fiber may be selected from the group consisting of glass fiber, flame retardant polyethylene terephthalate (flame retardant PET), flame retardant polypropylene (flame retardant PP), and combinations thereof.

In one embodiment of the present invention, the glass fiber may be selected from the group consisting of C-glass, E-glass, S-glass, glass-wool, and combinations thereof.

In one embodiment of the present invention, the skin layer may be selected from the group consisting of aluminum, iron, stainless steel (SUS), magnesium, electro-galvanized steel (EGI), hot-dip galvanized steel (GI), and combinations thereof.

In one embodiment of the present invention, the adhesive layer may include one selected from the group consisting of an olefin-based adhesive, a urethane-based adhesive, an acrylic adhesive, an epoxy-based adhesive, and combinations thereof.

According to a second aspect of the present invention,
provided is a method of manufacturing the sandwich panel for a protective cover of an electric vehicle battery pack, including: a) mixing a fiber containing a thermoplastic resin and a flame retardant fiber; b) preparing a core layer by performing carding the mixed fiber and bonding the interfaces to each other through a needle punching process; c) forming an adhesive layer on at least one surface of the core layer; and d) forming a skin layer on the adhesive layer.

According to a third aspect of the present invention,
provided is a protective cover of an electric vehicle battery pack including the sandwich panel for a protective cover of an electric vehicle battery pack.

[Advantageous Effects]

The sandwich panel for a protective cover of an electric vehicle battery pack of the present invention has excellent formability because the material is lightweight and thin through the non-woven fiber aggregate structure, and even if a separate functional layer is not applied, has excellent mechanical properties and electromagnetic wave shielding and insulation effects as well as secures the flame retardant performance because flame retardant fibers are included in the core material.

[Brief Description of Drawings]

FIG. 1 is a schematic diagram of a sandwich panel according to a preferred embodiment of the present invention.
FIG. 2 is a schematic diagram of a flame retardant function and a non-combustible function of a sandwich panel according to a preferred embodiment of the present invention.
FIG. 3 is a photograph taken of a thickness expansion rate test results of the sandwich panel according to the embodiment of the present invention.

[Best Mode]

Various advantages and features of the present invention and a method accomplishing them will become clear with reference to the embodiments described below in detail in conjunction with the accompanying drawings. However, the present invention will not be limited to the embodiments disclosed below, but will be implemented in various different forms. The embodiments are provided only to make the disclosure of the present invention complete and allow those skilled in the art to completely recognize the scope of the present invention, and the present invention is only defined by the scope of the claims. Throughout the specification, like reference numerals refer to like elements.

Hereinafter, a sandwich panel for a protective cover of an electric vehicle battery pack according to a preferred embodiment of the present invention will be described in detail with reference to the accompanying drawings.

As a result of experiments by the present inventors, in the case of a conventional protective cover of an electric vehicle battery pack, a metal material or a thermoplastic or thermosetting fiber-reinforced composite material has been used. However, in the case of using a metal material as the protective cover of battery pack, there was a disadvantage of having high thermal conductivity and weight, and although the fiber-reinforced composite material is lightweight material with low thermal conductivity, there was a difficulty in securing a battery space in that it is difficult to manufacture it with a thin thickness.

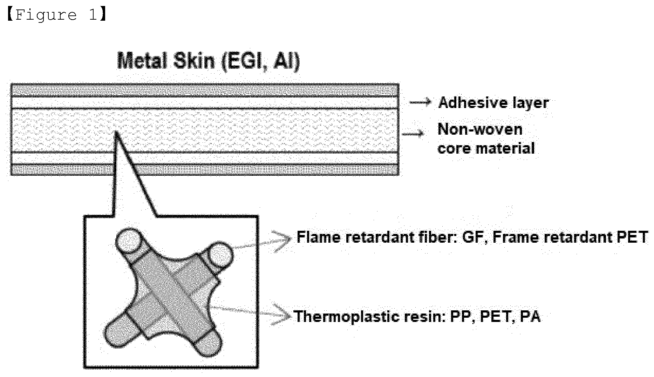

However, the present inventors have come to manufacture a sandwich panel for a protective cover of an electric vehicle battery pack by designing a core layer having a non-woven fiber aggregate structure so that thermoplastic resins (PP, PET, PA, etc.) and flame retardant fibers (glass fiber, flame retardant PET, etc.) are included in a core of non-woven fabric to reduce a weight of a material compared to a composite material, and improve formability, flame retardant performance, and insulation performance, and also applying an adhesive layer to the core layer and then forming a structure of skin layers (EGI, AI, etc.) of the sandwich panel on the adhesive layer to effectively shield electromagnetic waves, as illustrated in FIG. 1.

**Sandwich panel for protective cover of electric vehicle battery pack**

A sandwich panel for a protective cover of an electric vehicle battery pack according to the present invention includes a core layer that has a non-woven fiber aggregate structure; a skin layer that is stacked on at least one surface of the core layer; and an adhesive layer that bonds the core layer and the skin layer, wherein the core layer includes a thermoplastic resin and a flame retardant fiber.

The sandwich panel for a protective cover of an electric vehicle battery pack according to the present invention includes the core layer that has a non-woven fiber aggregate structure, in which the core layer may include two or more non-woven fiber aggregates.

In the present invention, the "non-woven fiber aggregate structure" is a structure including two or more non-woven fiber aggregates, and the "non-woven fiber aggregate" refers to bonding non-woven fibers on a web or sheet with an adhesive or bonding using thermoplastic fibers. Since the core layer according to the present invention has a non-woven fiber aggregate in which fibers are entangled with each other, all or parts of the fibers are fused by a binder, and thus, natural pores are included in the core layer, thereby improving air permeability and weight reduction. That is, since the fibers have natural pores formed by being entangled with each other, these are non-foaming cores, unlike the case where pores are artificially formed by additives such as a foaming agent, so the manufacturing costs may be reduced and the foaming process may be omitted, thereby increasing process efficiency. It is possible to improve the formability and processability through the non-woven fiber aggregate structure compared to the conventional thermoplastic or thermosetting foamed resins.

In the sandwich panel for a protective cover of an electric vehicle battery pack according to the present invention, the core layer includes a thermoplastic resin and a flame retardant fiber.

The thermoplastic resin may be a resin that may be deformed by applying heat again after being formed by applying heat. By including the thermoplastic resin in the core layer, the elongation is excellent compared to the thermosetting resin, and thus formability may be excellent. In addition, the thermoplastic resin has excellent formability not only when forming by applying heat again in a sheet state but also when cold forming, and has the advantage of lower raw material prices compared to thermosetting resins.

The thermoplastic resin may be selected from the group consisting of polyethylene, polypropylene, polyethylene terephthalate, polytrimethylene terephthalate, polybutylene terephthalate, polyethylene naphthalate, polyamide, polyphenylene sulfide, and combinations thereof, and preferably, may be selected from the group consisting of polypropylene, polyethylene terephthalate, polyamide, and combinations thereof.

The core layer may include 30 wt% or more, 35 wt% or more, 40 wt% or more, or 50 wt% or more of thermoplastic resin, and include 70% or less, 65 wt% or less, 60 wt% or less, or 50 wt% or less of thermoplastic resin, based on the total weight of the core layer. When the weight ratio of the thermoplastic resin is satisfied, the core layer has the effect of reducing the weight of the panel while securing the formability of the core layer and mechanical properties as a core material by preparing the non-woven fiber aggregate based on the thermoplastic resin, and may secure the flame retardant performance as a battery cover material.

The flame retardant fiber may be a fiber having excellent resistance to burning even when the fiber catches fire, or a fiber processed to have such a property.

The flame retardant fiber may be selected from the group consisting of glass fiber, flame retardant polyethylene terephthalate (flame retardant PET), flame retardant polypropylene (flame retardant PP), and combinations thereof, and preferably may be the glass fiber. By including the flame retardant fiber in the core layer, the glass layer may have an effect that shrinkage or melting of the core layer is insignificant even after ignition in the event of a fire, and may secure excellent flame retardant performance that does not burn well.

The glass fiber may be selected from the group consisting of C-glass, E-glass, S-glass, glass-wool, and combinations thereof, and preferably, may be the E-glass.

The core layer may include 30 wt% or more, 40 wt% or more, 50 wt% or more, or 60 wt% or more of flame retardant fiber, and include 70% or less, 60 wt% or less, or 50 wt% or less of flame retardant fiber, based on the total weight of the core layer. When the weight ratio of the flame retardant fiber is satisfied, there is an effect capable of delaying or preventing the spread of fire even when the ignition of the battery pack occurs by securing semi-nonflammable performance or flame retardant performance.

The core layer may further include a phosphorus flame retardant agent. By including the phosphorus flame retardant agent, there is an effect of realizing excellent flame retardant performance and stability against heat. The core layer may include 5 wt% or more, 10 wt% or more, 15 wt% or more, or 20 wt% or more of phosphorus flame retardant agent, and include 30 wt% or less, 25 wt% or less, or 20 wt% or less, and 15 wt% or less of phosphorus flame retardant agent, based on the total weight of the core layer.

The phosphorus flame retardant agent may be selected from the group consisting of phosphate ester, phosphate, phosphonate, phosphinate, phosphine oxide, phosphazene, phosphoric acid, and combinations thereof.

In addition, the core layer may further include a filler such as carbon fiber, polymer fiber, wood fiber, and natural fiber. In addition, the core layer may further include additives such as an impact modifier, a heat stabilizer, an antioxidant, a water repellent, and an antistatic agent.

The sandwich panel for a protective cover of an electric vehicle battery pack according to the present invention includes a skin layer stacked on at least one surface of the core layer.

The skin layer may be made of a metal material, and may be preferably selected from the group consisting of aluminum, iron, stainless steel (SUS), magnesium, electro-galvanized steel (EGI), hot-dip galvanized steel (GI), and combinations thereof. For example, in order to have excellent formability and flexural stiffness, the skin layer including the electro-galvanized steel (EGI) may be applied to the sandwich panel for a protective cover of an electric vehicle battery pack. In addition, for the weight reduction, the skin layer including aluminum may be applied to the sandwich panel for a protective cover of an electric vehicle battery pack.

In order to form the skin layer on the adhesive layer, any one of a photocuring method, a thermal curing method, and a thermal compression method may be used. For example, the sandwich panel may be manufactured by thermally curing or thermally compressing a laminate including the skin layer, the core layer, and the adhesive.

The thermal curing may be performed at 110 to 240°C for about 1 minute to 1 hour, and the curing may also be performed at room temperature for about 1 to 10 hours.

The skin layer may have a thickness of 0.1 to 2 mm. The skin layer of the conventional sandwich panel had to be thick because the mechanical strength of the core material decreased, which caused a problem in that the weight of the sandwich panel increased. However, in the sandwich panel for a protective cover of an electric vehicle battery pack according to the present invention, the mechanical properties do not rapidly deteriorate while allowing the skin layer to have the thickness within the above range, thereby implementing the weight reduction.

The sandwich panel for a protective cover of an electric vehicle battery pack according to the present invention includes an adhesive layer that bonds the skin layer and the core layer.

The adhesive layer is applied between the core layer and the skin layer to bond between the core layer and the skin layer. The adhesive layer is preferably applied with a uniform thickness in consideration of viscosity. In the present invention, the core layer and the skin layer may be stacked and then cured to manufacture the sandwich panel, or the core layer and the skin layer may be stacked and thermally compressed to manufacture the sandwich panel. In this case, as the adhesive penetrates into the core layer during curing or thermal compression, there is an effect of improving the adhesive force between the skin layer and the core layer by mechanical bonding as well as chemical bonding with components constituting the core layer. The chemical bonding means that the adhesive is bonded with the upper and lower surfaces of the core layer by means of a covalent bond, hydrogen bonding, van der Waals bonding, ionic bonding, or the like.

The mechanical bonding refers to a form in which the adhesive is physically hung as if rings are interlocked to each other while permeating the core layer. This form is also called a mechanical interlocking. Due to the natural pores included in the core layer, the adhesive penetrates into the upper and lower surfaces of the core layer.

The adhesive constituting the adhesive layer may include one selected from the group consisting of an olefin-based adhesive, a urethane-based adhesive, an acrylic adhesive, an epoxy-based adhesive, and combinations thereof. As the olefin-based adhesive, at least one selected from the group consisting of polyethylene, polypropylene, and amorphous polyalphaolefin adhesives may be used. The urethane-based adhesive may be used without limitation as long as it has a urethane structure (-NH-CO-O-). The acrylic adhesive may be at least one of a polymethyl methacrylate adhesive, a hydroxy group-containing polyacrylate adhesive, and a carboxyl group-containing polyacrylate adhesive. The epoxy-based adhesive may be at least one of a bisphenol-A type epoxy adhesive, a bisphenol-F type epoxy adhesive, a novolak epoxy adhesive, linear aliphatic epoxy resins, and cycloaliphatic epoxy resins.

In addition, the adhesive may be a photocurable adhesive, a hot melt adhesive or a thermosetting adhesive, and any one of a photocuring method and a thermal curing method may be used. For example, the sandwich panel may be manufactured by thermally curing a laminate including the skin layer, the core layer, and the adhesive. The thermal curing may be performed at 110 to 240°C for about 1 minute to 1 hour, and the curing may also be performed at room temperature for about 1 to 10 hours.

The adhesive layer may be applied to a thickness of about 20 to 300 μm, but is not limited thereto.

A method of applying the adhesive layer to one surface of the skin layer may be any one method selected from a die coating method, a gravure coating method, a knife coating method, or a spray coating method.

In this specification, electromagnetic shielding effectiveness (EMI SE) is for measuring a material to shield electromagnetic waves or the ability of the material, and the electromagnetic shielding ability of the sandwich panel measured as the electromagnetic interference shielding effectiveness (EMI SE) is decibels [dB], which is based on the ASTM D4935-10 (Standard test method for measuring the electromagnetic shielding effectiveness of Planar Materials) measurement standard, and is defined as in Equation 1 below.

[Equation 1]

$$SE\,(\text{unit}: decibels, dB) = 10log\frac{P1}{P2}$$

(P1: Received power when shielding material is present / P2: Received power when shielding material is not present)

The sandwich panel for a protective cover of an electric vehicle battery pack has an electromagnetic shielding ability, which is measured as the electromagnetic interference shielding effectiveness (EMI SE), of 81 to 120 dB, preferably 81 to 110 dB, and more preferably 81 to 100 dB with respect to a frequency of 0.03 to 1.5 GHz. When the above range is satisfied, the sandwich panel for a protective cover of an electric vehicle battery pack having excellent electromagnetic shielding effectiveness may be manufactured without applying a separate functional layer.

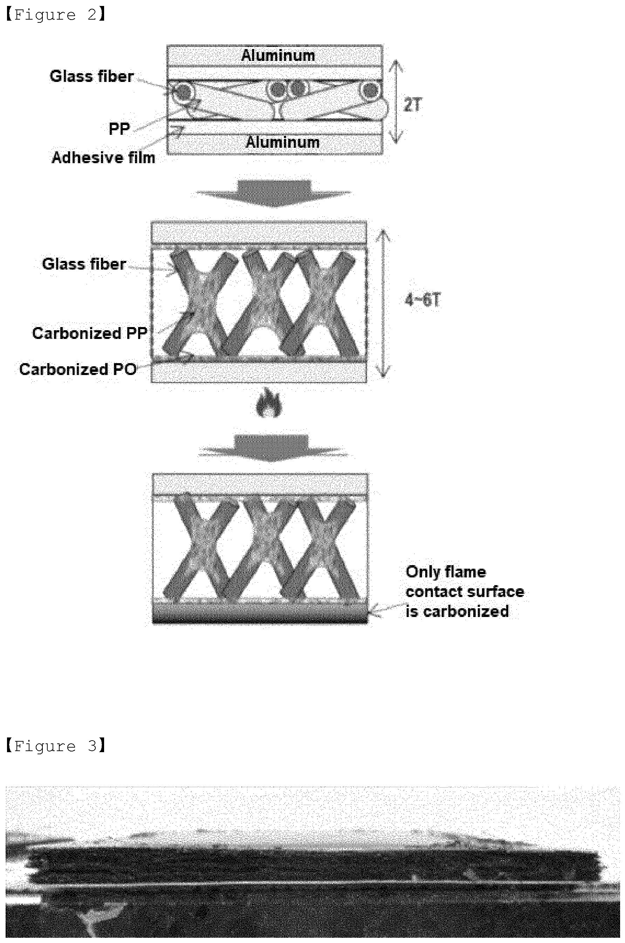

The sandwich panel for a protective cover of an electric vehicle battery pack according to the present invention has flame retardant performance. As illustrated in the upper portion of FIG. 2, the sandwich panel of the present invention may include a fiber using a thermoplastic resin such as PP and a flame retardant fiber such as glass fibers in the core material. As illustrated in the middle of FIG. 2, when a fire occurs on the outside of such a sandwich panel, the PP resin melts at a high temperature and expands in the thickness direction of the core material due to the elasticity of the glass fiber. Thereafter, an incombustible layer is formed by the glass fiber and the carbonized PP, and thus, the propagation of the flame is suppressed by the heat insulating effect. As a result, the thickness of the panel increases, so the structural stiffness may be improved and the occurrence of warpage may be suppressed.

The flame retardant performance of the sandwich panel for a protective cover of an electric vehicle battery pack according to the present invention may be known through the confirmation of the thickness expansion rate according to heating. Specifically, in the sandwich panel for a protective cover of an electric vehicle battery pack according to the present invention, as the PP resin melts at a high temperature and expands in the thickness direction of the core material by the elasticity of the glass fiber, when measuring the thickness expansion rate (thickness after expansion/initial thickness) after holding for 5 minutes in an oven of 200°C, the thickness expansion rate may be 150% or more, 200% or more, 250% or more, or 300% or more, and there is no particular upper limit, but the thickness expansion rate may be up to 1000%. When the thickness expansion rate of the sandwich panel for a protective cover of an electric vehicle battery pack according to the present invention satisfies the above range, there is an effect of suppressing the propagation of flame due to the heat insulation effect.

In order to evaluate the flame retardant performance of the sandwich panel for a protective cover of an electric vehicle battery pack, a burning test may be performed. The combustion test may be performed by UL94 Vertical Burning Test to evaluate the combustion aspect and the degree of flame to the surroundings when a flame is applied in the vertical direction of the product.

Specifically, after applying a 20 mm long flame to a specimen for 10 seconds, an afterflame time t1 of the specimen is measured, and when afterflame after a first flame application is finished, after the flame application for 10 seconds again, an afterflame time t2 and an afterglow time t3 of the specimen are measured. In addition, the afterflame pattern (whether cotton is ignited by dropping, whether or not clamp (125mm mark) is burned) is recorded. Thereafter, the case where individual afterflame time (t1 or t2) is 10 seconds or less, a total afterflame time for any condition set (t1 + t2 for 5 samples) is 50 seconds or less, afterflame plus afterglow time for each individual specimen after second flame application (t2 + t3) is 30 seconds or less, burning up to the holding clamp (125 mm mark) is not made, and cotton ignition due to dropping does not occur is evaluated as V-0 grade, which may be evaluated as securing the flame retardant performance that may be used as the sandwich panel for a protective cover of an electric vehicle battery pack.

**Method of manufacturing sandwich panel for protective cover of electric vehicle battery pack**

The sandwich panel for a protective cover of an electric vehicle battery pack according to the present invention is formed by sequentially stacking the skin layer 20, the core layer 10, and the skin layer 20, and applying the adhesive layer (not shown) between the core layer 10 and the skin layer 20. After the above components are stacked, curing and compression steps may be performed, but are not limited thereto.

Specifically, a method of manufacturing the sandwich panel for a protective cover of an electric vehicle battery pack according to the present invention includes the steps of: a) mixing a fiber containing a thermoplastic resin and a flame retardant fiber; b) preparing a core layer by performing carding the mixed fiber and then bonding the interfaces to each other through a needle punching process; c) forming an adhesive layer on at least one surface of the core layer; and d) forming a skin layer on the adhesive layer.

In step a), which is a step of mixing a fiber containing a thermoplastic resin and a flame retardant fiber, the thermoplastic resin and flame retardant fibers may be prepared and then mixed to manufacture a non-woven fiber aggregate.

Specifically, the non-woven fiber aggregate may include 30 wt% or more, 35 wt% or more, 40 wt% or more, or 50 wt% or more of thermoplastic resin, or include 70% or less, 65 wt% or less, 60 wt% or less, or 50 wt% or less of thermoplastic resin, based on the total weight of the non-woven fiber aggregate.

The non-woven fiber aggregate may include 30 wt% or more, 40 wt% or more, 50 wt% or more, or 60 wt% or more of flame retardant fiber, or include 70% or less, 60 wt% or less, or 50 wt% or less of flame retardant fibers, based on the total weight of the non-woven fiber aggregate.

The thermoplastic resin mixed in the preparation of the non-woven fiber aggregate may be selected from the group consisting of polyethylene, polypropylene, polyethylene terephthalate, polytrimethylene terephthalate, polybutylene terephthalate, polyethylene naphthalate, polyamide, polyphenylene sulfide, and combinations thereof, and preferably, may be selected from the group consisting of polypropylene, polyethylene terephthalate, polyamide, and combinations thereof.

In addition, the flame retardant fiber mixed in the preparation of the non-woven fiber aggregate may be selected from the group consisting of glass fiber, flame retardant polyethylene terephthalate (flame retardant PET), flame retardant polypropylene (flame retardant PP), and combinations thereof, and preferably may be the glass fiber. The glass fiber may be selected from the group consisting of C-glass, E-glass, S-glass, glass-wool, and combinations thereof, and preferably, may be the E-glass.

The step b) may be a step of preparing a core layer by performing carding the mixed fiber and then bonding the interfaces to each other through a needle punching process.

The carding process may be used without particular limitation as long as it is a method used in the art.

The needle punching process may be performed on the mixed non-woven fiber aggregate with the number of punching times of 300 to 1000 times per minute, a moving speed of the non-woven fiber aggregate of 1 to 8 m/min, and a punching density of 100 to 500 punches/cm$^2$, and more preferably, the needle punching process may be performed with the number of punching times of 400 to 700 times per minute, a moving speed of the non-woven fiber aggregate of 1.5 to 6 m/min, and a punching density of 200 to 400 punches/cm$^2$.

If the number of times of punching per minute is less than 300 times, there is a problem in that the degree of binding between the non-woven fiber aggregates decreases, and if the number of times of punching per minute is more than 1000 times, there is a problem in that the non-woven fiber aggregates are fractured. In addition, if the moving speed of the non-woven fiber aggregate is slower than 1 m/min, there is a problem in that the production speed is too slow, and if the moving speed of the non-woven fiber aggregate is faster than 8 m/min, there is a problem in that the punching density is not easy to control. In addition, if the punching density is less than 100 punches/cm$^2$, there is a problem in that the degree of binding between the non-woven fiber aggregates decreases, and if the punching density is more than 500 punches/cm$^2$, there is a problem in that the non-woven fiber aggregates are fractured.

The needle punching process may be performed twice or more. When the needle punching process is performed twice or more, it is possible to increase the binding force of interlayer fibers, which is effective in preventing delamination between layers.

As the needle punching process is performed in the above range, the physical bonding force by the needle punching is improved, and thus the physical properties such as the tensile strength of the core layer are improved, thereby improving the shear strength and deflection of the finally manufactured sandwich panel for a protective cover of an electric vehicle battery pack.

Specifically, after the flame retardant fiber is mixed with the thermoplastic resin and then subjected to carding using a carding machine, the needle punching process is performed under the above conditions to prepare the non-woven fiber aggregate (non-woven fabric) having a basis weight of 300 to 1800 gsm.

Thereafter, the prepared non-woven fiber aggregate (non-woven fabric) is mounted on a plurality of unwinding devices and then moved to a hot press. In this case, after mounting 1 to 10 of prepared non-woven fiber aggregates in a plurality of unwinding devices according to the number, the prepared non-woven fiber aggregates may be moved to a hot press for preparing the core layer. In this way, when a plurality of non-woven fiber aggregates are used using a plurality of unwinding devices, the thickness of each non-woven fiber aggregate is thin, so the length of the non-woven fiber aggregates wound around one unwinding device becomes long. Therefore, since it is possible to reduce the number of uses of a soft aerator for connecting non-woven fiber aggregates continuously fed during a continuous process, there is an advantage in that it is possible to simplify the process.

Thereafter, the core layer of the non-woven fiber aggregate structure is prepared by heating and pressing the plurality of non-woven fiber aggregates (non-woven fabrics) moved to the hot press under a temperature condition of 130 to 240°C and a pressure condition of 1 to 10 MPa. The hot press is not particularly limited as long as it is generally used in the art, and a double belt press or the like may be used as a specific example.

In addition, the method for manufacturing the sandwich panel for a protective cover of an electric vehicle battery pack according to the present invention may include a step of performing the needle punching process of the step b), and then preheating at a temperature of 130 to 240°C for 1 to 10 minutes.

The step c) may be a step of forming an adhesive layer on at least one surface of the core layer.

The adhesive layer may be one selected from the group consisting of an olefin-based adhesive, a urethane-based adhesive, an acrylic adhesive, an epoxy-based adhesive, and combinations thereof. As the olefin-based adhesive, at least one selected from the group consisting of polyethylene, polypropylene, and amorphous polyalphaolefin adhesives may be used. The urethane-based adhesive may be used without limitation as long as it has a urethane structure (-NH-CO-O-). The acrylic adhesive may be at least one of a polymethyl methacrylate adhesive, a hydroxy group-containing polyacrylate adhesive, and a carboxyl group-containing polyacrylate adhesive. The epoxy-based adhesive may be at least one of a bisphenol-A type epoxy adhesive, a bisphenol-F type epoxy adhesive, a novolak epoxy adhesive, linear aliphatic epoxy resins, and cycloaliphatic epoxy resins.

In addition, the adhesive may be a photocurable adhesive, a hot melt adhesive or a thermosetting adhesive, and any one of a photocuring method and a thermal curing method may be used. For example, the sandwich panel may be manufactured by thermally curing a laminate including the skin layer, the core layer, and the adhesive.

The adhesive layer may be applied to a thickness of about 20 to 300 $\mu$m, but is not limited thereto.

A method of applying the adhesive layer to one surface of the skin layer may use any one method selected from a die coating method, a gravure coating method, a knife coating method, or a spray coating method.

The step d) may include a step of forming the skin layer on the adhesive layer.

The skin layer may be made of a metal material, and may be preferably selected from the group consisting of aluminum, iron, stainless steel (SUS), magnesium, electro-galvanized steel (EGI), hot-dip galvanized steel (GI), and combinations thereof. The skin layer may have a thickness of 0.1 to 2 mm. The skin layer of the conventional sandwich panel had to be thick because the mechanical strength of the core material decreased, so there was a problem in that the weight of the sandwich panel increased. However, in the sandwich panel for a protective cover of an electric vehicle battery pack according to the present invention, the mechanical properties do not rapidly deteriorate while allowing the skin layer to have the thickness within the above range, thereby implementing the weight reduction.

In order to form the skin layer on the adhesive layer, any one of a photocuring method, a thermal curing method, and a thermal compression method may be used. For example, the sandwich panel for a protective cover of an electric vehicle battery pack may be finally manufactured by thermally curing or thermally compressing the laminate including the skin layer, the core layer, and the adhesive. The thermal curing may be performed at 110 to 240°C for about 1 minute to 1 hour, and the curing may also be performed at room temperature for about 1 to 10 hours.

The protective cover of an electric vehicle battery pack according to the present invention includes the sandwich panel for a protective cover of an electric vehicle battery pack.

As described above, the sandwich panel for a protective cover of an electric vehicle battery pack according to the present invention includes a non-woven fiber aggregate structure, and thus it is lightweight and has excellent formability, secures the flame retardant performance by introducing the flame retardant fiber, and has an excellent heat insulation performance and an electromagnetic wave shielding performance through a metal-based skin layer, so that it may be used for a protective cover of an electric vehicle battery pack by replacing the existing metal composite material or thermoplastic or thermosetting fiber-reinforced composite material.

Hereinafter, preferred Examples will be provided in order to help the understanding of the present invention. However, it is obvious to those skilled in the art that the following Examples are only illustrative of the present invention, and various changes and modifications are possible within the scope and spirit of the present invention, and also it is natural that these change and modifications fall within the scope of the appended claims.

**Manufacturing of sandwich panel for protective cover of electric vehicle battery pack: Examples 1 to 5 and Comparative Example 1**

[Example 1]

A polypropylene (PP) fiber (GH new material, fineness of 15 denier) and glass fiber, E-Glass (Owens Corning, SE4121) were mixed at a weight ratio of 70: 30.

After the fiber is mixed and then subjected to carding using a carding machine, the non-woven fiber aggregate (non-woven fabric) having a basis weight of 800 gsm was prepared by the needle punching process with the number of punching times of 500 times per minute, the moving speed of the non-woven fiber aggregate of 2 m/min, and the punching density of 200 punches /cm$^2$.

After the non-woven fiber aggregate is mounted on two unwinding devices, the needle punching process with the number of punching times of 500 times per minute, the moving speed of the non-woven fiber aggregate of 2 m/min, and the punching density of 200 punches/cm$^2$ was repeated to form the physical re-binding between the non-woven fiber aggregates.

After entering a preheating chamber having a temperature in the chamber of 210°C, the non-woven fiber aggregate bonded by the needle punching was preheated for 3 minutes.

Thereafter, the non-woven fiber aggregate was transferred to a double belt press at a speed of 5 m/min. In this case, the heating temperature of the double belt press was 200°C and the pressure was 5 Bar. After performing heating/pressing for 10 minutes, cold pressing was performed at 25°C for 6 minutes with 5 bar to prepare a core layer of 1.2 mm.

A polyolefin adhesive (Samsung Gratech, KS010C) is applied on both surfaces of the core layer to a thickness of 50 $\mu$m to form an adhesive layer, an aluminum plate (Namsun Aluminum, 5052H32) having a thickness of 0.4 mm is stacked on the adhesive layer, the stacked result was subjected to heat lamination at 130°C for 6 minutes with 5 bar, and then cooled at 25°C for 4 minutes with 5 bar, thereby finally manufacturing the sandwich panel for a protective cover of an electric vehicle battery pack having a thickness of 2.0 mm.

[Example 2]

The sandwich panel was prepared in the same manner as Example 1, except that the polypropylene (PP) fiber (GH new material, fineness of 15 deniers) and the glass fiber, E-Glass (Owens Corning, SE4121) were mixed at a weight ratio of 50: 50.

[Example 3]

The sandwich panel was prepared in the same manner as Example 1, except that the polypropylene (PP) fiber (GH new material, fineness of 15 deniers) and the glass fiber, E-Glass (Owens Corning, SE4121) were mixed at a weight ratio of 40: 60.

[Example 4]

The sandwich panel was prepared in the same manner as Example 1, except that the polypropylene (PP) fiber (GH new material, fineness of 15 deniers) and the glass fiber, E-Glass (Owens Corning, SE4121) were mixed at a weight ratio of 30: 70.

[Example 5]

After a polypropylene (PP) fiber (GH new material, fineness of 15 denier) and a glass fiber, E-Glass (Owens Corning, SE4121) were mixed at the same weight ratio, and then subjected to carding using a carding machine. Thereafter, the sandwich panel was manufactured in the same manner as Example 1, except that a non-woven fiber aggregate (non-woven fabric) having a basis weight of 1000 gsm was prepared by the needle punching process with the number of punching times of 500 times per minute, the moving speed of non-woven fiber aggregate of 2 m/min, and the punching density of 200 punches/cm$^2$, and then prepared by spraying and coating the phosphorus flame retardant agent (Universal Chemtech, MX-2270) on the surface of the nonwoven fabric with a spray gun so that the polypropylene (PP) fiber, the glass fiber, and the phosphorus flame retardant agent are mixed at a weight ratio of 40: 40: 20.

The sandwich panel for a protective cover of an electric vehicle battery pack was manufactured in the same manner as in Example 1, except that the phosphorus flame retardant agent was sprayed and coated on the surface of the prepared core layer with the spray gun.

[Comparative Example 1]

A sandwich panel was manufactured in the same manner as in Example 1, except that the polypropylene (PP) fiber (GH new material, fineness of 15 denier) and the PET fiber (Daeyang, Super-A) were mixed at a weight ratio of 40: 60.

**Experimental Example 1: Panel weight comparison test**

For the sandwich panel for a protective cover of an electric vehicle battery pack prepared in Examples 1 to 5 and Comparative Example 1, the panel weight was measured according to the ASTM D3776 standard and compared as shown in Table 1 below.

[Table 1]

| Classification | Example 1 | Example 2 | Example 3 | Example 4 | Example 5 | Comparative Example 1 |
|---|---|---|---|---|---|---|
| Material Unit Weight (kg/m2) | 3.0 | 3.0 | 3.0 | 3.0 | 3.2 | 3.0 |
| Part Weight (kg) | 7.6 | 7.6 | 7.6 | 7.6 | 8.1 | 7.6 |

Through the above Table 1, it was confirmed that the samples were prepared with the same weight.

**Experimental Example 2: Comparison of Flexural**

**Performance**

For the sandwich panel for a protective cover of an electric vehicle battery pack prepared in Examples 1 to 5 and Comparative Example 1, the maximum load and flexural stiffness were measured and compared in Table 2 below.
(1) Maximum load measurement: ASTM C393 3-point flexural test (specimen size 200*50 mm, measuring speed 6 mm/min, span 150 mm)
(2) Flexural stiffness measurement: measurement of deflection after load application (specimen size 250*75 mm, applied load 1.8 kg, span 200 mm)

[Table 2]

| Classification | Example 1 | Example 2 | Example 3 | Example 4 | Example 5 | Comparative Example 1 |
|---|---|---|---|---|---|---|
| Maximum Load (N) | 107 | 148 | 141 | 70 | 160 | 121 |
| Amount of deflection (mm) | 1.8 | 1.0 | 1.2 | 8.0 | 1.0 | 1.5 |

Through Table 2, it was confirmed that the glass fiber content had a maximum stiffness value at 40 to 60 wt%.

**Experimental Example 3: Comparison of Thermal Conductivity**

For the sandwich panel for a protective cover of an electric vehicle battery pack prepared in Examples 1 to 5 and Comparative Example 1, the thermal conductivity was measured in a contact method using a flat plate heat flow method and compared in Table 3 below.

[Table 3]

| Classification | Example 1 | Example 2 | Example 3 | Example 4 | Example 5 | Comparative Example 1 |
|---|---|---|---|---|---|---|
| Thermal conductivity (W/m·K) | 0.049 | 0.047 | 0.044 | 0.043 | 0.050 | 0.055 |

Through Table 3, it was confirmed that as the glass fiber content increased, the thermal conductivity decreased and when the flame retardant was coated as in Example 5 or the PET fiber was applied instead of glass fiber as in Comparative Example 1, the porosity of the core material decreased, and thus the thermal conductivity increased.

**Experimental Example 4: Comparison of Thickness Expansion Rate**

For the sandwich panel for a protective cover of an electric vehicle battery pack prepared in Examples 1 to 5 and Comparative Example 1, the thickness and thickness expansion rate (initial thickness: 2.0 mmT) after maintained for 5 minutes in a preheating oven of 200°C and expanded were measured and compared in Table 4 below. In addition, after the thickness expansion rate test of Example 3, a photograph was taken and shown in FIG. 2. The thickness expansion rate was calculated as (thickness after expansion/initial thickness).

[Table 4]

| Classification | Example 1 | Example 2 | Example 3 | Example 4 | Example 5 | Comparative Example 1 |
|---|---|---|---|---|---|---|
| Thickness after Expansion (mm) | 3.6 | 4.5 | 6.0 | 6.1 | 5.2 | 1.8 |
| Thickness Expansion Rate (%) | 180 | 225 | 300 | 305 | 265 | 90 |

Through Table 4 and FIG. 3, it was confirmed that the thickness expansion rate increased as the glass fiber content increased, and that the thickness expansion did not occur when the PET fiber was applied instead of glass fiber as in Comparative Example 1.

**Experimental Example 5: Comparison of Burning Test Results**

For the sandwich panel for a protective cover of an electric vehicle battery pack prepared in Examples 1 to 5 and Comparative Example 1, after cutting it into the specimen size of 125 mm width $\times$ 13 mm length $\times$ 2 mm height, its burnability was measured according to UL94 vertical burning test and compared in Table 5 below. Specifically, the individual burning time, the total afterflame time for any condition set, aftertime plus afterglow time for each individual, burning up to the holding clamp (125mm mark), and cotton ignition were measured. The grades in Table 5 below are set according to the criteria of Table 6 below.

[Table 5]

| Classification | Example 1 | Example 2 | Example 3 | Example 4 | Example 5 | Comparative Example 1 |
|---|---|---|---|---|---|---|
| Individual Afterflame Time (sec) | 125 | 10 | 0 | 19 | 0 | 140 |
| Total Afterflame Time (sec) | 624 | 22 | 0 | 81 | 0 | 624 |
| Afterglow Time (sec) | 125 | 0 | 0 | 19 | 0 | 140 |
| Burning up to 125mm | Yes | No | No | No | No | Yes |
| Cotton ignition | Yes | No | No | No | No | Yes |
| Grade | Out of Grade | V-0 | V-0 | V-1 | V-0 | Out of Grade |

[Table 6]

| | V-0 | V-1 | V-2 |
|---|---|---|---|
| Individual afterflame time, t1 or t2 | < 10 sec | < 30 sec | ≤ 30 sec |
| Total afterflame time for any condition set, t1+t2 for the 5 specimens | ≤ 50 sec | ≤ 250 sec | ≤ 250 sec |
| Aftertime plus afterglow time for each individual specimen after the second flame application, t2+t3 | < 30 sec | < 60 sec | ≤ 60 sec |
| Burning up to the holding clamp (125mm mark) | No | No | No |
| Cotton ignition due to dropping | No | No | Yes |

Through Table 5, it was found that the flame retardant effect of the sandwich panels of Examples 1 to 5 was superior to that of Comparative Example 1. It was also found that even among the examples, as the glass fiber content was relatively higher, the flame retardant effect was more excellent but the flame retardant effect was lowered when the glass fiber content was too high. In addition, it was found that the flame retardant effect of Example 3 containing an appropriate amount of glass fibers and Example 5 further containing the phosphorus flame retardant agent was the most excellent.

**Experimental Example 6: Comparison of Semi-nonflammable Test Results**

For the sandwich panel for a protective cover of an electric vehicle battery pack prepared in Examples 1 to 5 and Comparative Example 1, a semi-nonflammable test according to ISO 5660-1 (specimen size 100 * 100 mm) was performed, and the results are shown in Table 7 below. When the THR was 8 MJ/m$^2$ or less and the Peak HRR was within 10 seconds, it was set as a semi-nonflammable grade.

[Table 7]

| Classification | Example 1 | Example 2 | Example 3 | Example 4 | Example 5 | Comparative Example 1 |
|---|---|---|---|---|---|---|
| THR1 (600 sec, MJ/m2) | 16 | 1.5 | 0.8 | 0.3 | 0.2 | 24 |
| Peak HRR2 (200kW/m2 excess time, sec) | 0 | 0 | 0 | 0 | 0 | 12 |
| Grade | Flame Retardant (3 Grade) | Semi-nontlamma-ble (2 Grade) | Semi-nontlamma-ble (2 Grade) | Semi-nonflamma-ble (2 Grade) | Semi-nonflamma-ble (2 Grade) | Flame Retardant (3 Grade) |

Through Table 7, it was found that the semi-nonflammability of the sandwich panels of Examples 1 to 5 was superior to that of Comparative Example 1. It was also found that among the examples, as the glass fiber content was relatively high, the semi-nonflammablity was more excellent but the semi-nonflammable effect was reduced when the glass fiber content was too high. In addition, it was found that the semi-nonflammablity of Example 3 containing an appropriate amount of glass fiber and Example 5 further containing the phosphorus flame retardant agent was the most excellent.

Accordingly, all simple modifications or changes belong to the scope of the present invention, and the specific protection scope of the present invention will be clarified by the appended claims.

**Claims**

1.  A sandwich panel for a protective cover of an electric vehicle battery pack, comprising:

    a core layer that has a non-woven fiber aggregate structure;
    a skin layer that is stacked on at least one surface of the core layer; and
    an adhesive layer that bonds the core layer and the skin layer,
    wherein the core layer comprises a thermoplastic resin and a flame retardant fiber.

2.  The sandwich panel of claim 1, wherein the core layer comprises 30 wt% or more of flame retardant fiber based on a total weight of the core layer.

3.  The sandwich panel of claim 1, wherein the core layer comprises 50 wt% or more of flame retardant fiber based on a total weight of the core layer.

4.  The sandwich panel of claim 1, wherein the core layer comprises 60 wt% or more of flame retardant fiber based on a total weight of the core layer.

5.  The sandwich panel of claim 1, wherein the core layer comprises 70 wt% or more of flame retardant fiber based on a total weight of the core layer.

6.  The sandwich panel of claim 1, wherein the core layer further comprises a phosphorus flame retardant agent.

7. The sandwich panel of claim 1, wherein the thermoplastic resin is selected from the group consisting of polyethylene, polypropylene, polyethylene terephthalate, polytrimethylene terephthalate, polybutylene terephthalate, polyethylene naphthalate, polyamide, polyphenylene sulfide, and combinations thereof.

8. The sandwich panel of claim 1, wherein the flame retardant fiber is selected from the group consisting of glass fiber, flame retardant polyethylene terephthalate (flame retardant PET), flame retardant polypropylene (flame retardant PP), and combinations thereof.

9. The sandwich panel of claim 8, wherein the glass fiber is selected from the group consisting of C-glass, E-glass, S-glass, glass-wool, and combinations thereof.

10. The sandwich panel of claim 1, wherein the skin layer is selected from the group consisting of aluminum, iron, stainless steel (SUS), magnesium, electro-galvanized steel (EGI), hot-dip galvanized steel (GI), and combinations thereof.

11. The sandwich panel of claim 1, wherein the adhesive layer comprises one selected from the group consisting of an olefin-based adhesive, a urethane-based adhesive, an acrylic adhesive, an epoxy-based adhesive, and combinations thereof.

12. The sandwich panel of claim 1, wherein the sandwich panel has a thickness expansion rate (thickness after expansion/initial thickness) of 150% or more after being held in an oven at 200° C for 5 minutes.

13. A method of manufacturing the sandwich panel for a protective cover of an electric vehicle battery pack of claim 1, the method comprising:

   a) mixing a fiber containing a thermoplastic resin and a flame retardant fiber;
   b) preparing a core layer by performing carding the mixed fiber and bonding the interfaces to each other through a needle punching process;
   c) forming an adhesive layer on at least one surface of the core layer; and
   d) forming a skin layer on the adhesive layer.

14. A protective cover of an electric vehicle battery pack, comprising the sandwich panel for a protective cover of an electric vehicle battery pack of any one of claims 1 to 12.

【Figure 1】

Metal Skin (EGI, Al)

→ Adhesive layer

→ Non-woven core material

Flame retardant fiber: GF, Frame retardant PET

Thermoplastic resin: PP, PET, PA

【Figure 2】

【Figure 3】

## INTERNATIONAL SEARCH REPORT

| International application No. |
| --- |
| **PCT/KR2021/016890** |

| A. | CLASSIFICATION OF SUBJECT MATTER |
| --- | --- |

**H01M 50/24**(2021.01)i; **H01M 50/20**(2021.01)i

According to International Patent Classification (IPC) or to both national classification and IPC

| B. | FIELDS SEARCHED |
| --- | --- |

Minimum documentation searched (classification system followed by classification symbols)

H01M 50/24(2021.01); B32B 5/02(2006.01); D04H 1/435(2012.01); D04H 1/541(2012.01); H01M 50/20(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 부직 섬유(nonwoven fiber), 집합체(assembly), 코어층(core layer), 스킨층(skin layer), 접착층(adhesive layer), 난연성 섬유(flame retarding fiber), 열가소성 수지(thermoplastic resin), 카딩(carding), 니들펀칭(needle punching), 패널(panel), 전기자동차(electric vehicle ), 보호(protective), 커버(cover)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2019-0104791 A (LG HAUSYS, LTD.) 11 September 2019 (2019-09-11)<br>See paragraphs [0019]-[0098]. | 1-14 |
| Y | KR 10-2017-0112571 A (TORAY CHEMICAL KOREA INC.) 12 October 2017 (2017-10-12)<br>See paragraphs [0045] and [0046]; and claims 1 and 18. | 1-14 |
| Y | KR 10-2020-0029735 A (LG HAUSYS, LTD.) 19 March 2020 (2020-03-19)<br>See paragraphs [0003], [0030]-[0034] and [0046]-[0058]; and figure 7. | 1-14 |
| Y | KR 10-2020-0043682 A (LG HAUSYS, LTD.) 28 April 2020 (2020-04-28)<br>See paragraphs [0002] and [0029]-[0065]; and figure 7. | 1-14 |
| Y | KR 10-2020-0029736 A (LG HAUSYS, LTD.) 19 March 2020 (2020-03-19)<br>See paragraphs [0003], [0024] and [0033]-[0053]; and figure 7. | 1-14 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 February 2022** | **18 February 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

International application No.

**PCT/KR2021/016890**

| Patent document cited in search report | Publication date (day/month/year) | Patent family member(s) | | Publication date (day/month/year) |
|---|---|---|---|---|
| KR 10-2019-0104791 A | 11 September 2019 | CN 109618554 | A | 12 April 2019 |
| | | EP 3470217 | A1 | 17 April 2019 |
| | | EP 3470217 | B1 | 04 August 2021 |
| | | EP 3470218 | A1 | 17 April 2019 |
| | | EP 3470218 | B1 | 11 November 2020 |
| | | EP 3470219 | A1 | 17 April 2019 |
| | | EP 3470219 | B1 | 04 August 2021 |
| | | EP 3470220 | A1 | 17 April 2019 |
| | | EP 3470220 | B1 | 04 August 2021 |
| | | KR 10-2017-0140102 | A | 20 December 2017 |
| | | KR 10-2017-0140103 | A | 20 December 2017 |
| | | KR 10-2017-0140104 | A | 20 December 2017 |
| | | KR 10-2017-0140105 | A | 20 December 2017 |
| | | KR 10-2017-0140106 | A | 20 December 2017 |
| | | KR 10-2017-0140108 | A | 20 December 2017 |
| | | KR 10-2017-0140109 | A | 20 December 2017 |
| | | KR 10-2017-0140110 | A | 20 December 2017 |
| | | KR 10-2017-0140111 | A | 20 December 2017 |
| | | KR 10-2017-0140112 | A | 20 December 2017 |
| | | KR 10-2019-0104785 | A | 11 September 2019 |
| | | KR 10-2019-0104797 | A | 11 September 2019 |
| | | KR 10-2019-0104799 | A | 11 September 2019 |
| | | KR 10-2019-0104801 | A | 11 September 2019 |
| | | KR 10-2020-0004914 | A | 14 January 2020 |
| | | KR 10-2066539 | B1 | 15 January 2020 |
| | | KR 10-2066542 | B1 | 15 January 2020 |
| | | KR 10-2066544 | B1 | 02 March 2020 |
| | | KR 10-2163085 | B1 | 07 October 2020 |
| | | KR 10-2243565 | B1 | 23 April 2021 |
| | | KR 10-2243566 | B1 | 23 April 2021 |
| | | KR 10-2243567 | B1 | 23 April 2021 |
| | | KR 10-2243568 | B1 | 23 April 2021 |
| | | KR 10-2269941 | B1 | 25 June 2021 |
| | | KR 10-2294370 | B1 | 26 August 2021 |
| | | KR 10-2294371 | B1 | 26 August 2021 |
| | | KR 10-2294372 | B1 | 26 August 2021 |
| | | KR 10-2317515 | B1 | 25 October 2021 |
| | | KR 10-2317516 | B1 | 25 October 2021 |
| | | KR 10-2317517 | B1 | 25 October 2021 |
| | | KR 10-2317518 | B1 | 25 October 2021 |
| | | US 10981341 | B2 | 20 April 2021 |
| | | US 11001035 | B2 | 11 May 2021 |
| | | US 11198273 | B2 | 14 December 2021 |
| | | US 2019-0105853 | A1 | 11 April 2019 |
| | | US 2019-0105877 | A1 | 11 April 2019 |
| | | US 2020-0269548 | A1 | 27 August 2020 |
| | | US 2020-0269549 | A1 | 27 August 2020 |
| | | US 2020-0276791 | A1 | 03 September 2020 |
| | | US 2021-0229402 | A1 | 29 July 2021 |
| | | WO 2017-213477 | A1 | 14 December 2017 |

Form PCT/ISA/210 (patent family annex) (July 2019)

**INTERNATIONAL SEARCH REPORT**
Information on patent family members

International application No.

**PCT/KR2021/016890**

| Patent document cited in search report | | | Publication date (day/month/year) | Patent family member(s) | | | Publication date (day/month/year) |
|---|---|---|---|---|---|---|---|
| | | | | WO | 2017-213478 | A1 | 14 December 2017 |
| | | | | WO | 2017-213479 | A1 | 14 December 2017 |
| | | | | WO | 2017-213480 | A1 | 14 December 2017 |
| | | | | WO | 2017-213481 | A1 | 14 December 2017 |
| KR | 10-2017-0112571 | A | 12 October 2017 | None | | | |
| KR | 10-2020-0029735 | A | 19 March 2020 | KR | 10-2259079 | B1 | 31 May 2021 |
| KR | 10-2020-0043682 | A | 28 April 2020 | KR | 10-2253108 | B1 | 14 May 2021 |
| KR | 10-2020-0029736 | A | 19 March 2020 | KR | 10-2225637 | B1 | 08 March 2021 |

Form PCT/ISA/210 (patent family annex) (July 2019)

**EP 4 250 451 A1**

**Patent documents cited in the description**

- KR 1020170140111